# EUROPÄISCHE PATENTANMELDUNG

(11) **EP 2 426 177 A1**
(43) Veröffentlichungstag der Anmeldung: **07.03.2012**
(21) Anmeldenummer: 10175634.4
(22) Anmeldetag: 07.09.2010
(51) Int. Cl.: C09D 5/02, C09D 7/02, B01D 19/04, B01F 17/00, C09B 67/00

(54) **Entschäumende Netzmittel für wässrige Beschichtungssysteme**

(71) Anmelder: Cognis IP Management GmbH, 40589 Düsseldorf (DE)
(72) Erfinder: Oestreich, Sascha, 40589 Düsseldorf (DE); Wolf, Renate Dr., 46397Bocholt (DE); Bene, Peter, 50765 Köln (DE)

(57) **Zusammenfassung**

Verbindungen der Struktur R-O-(PO)ₓH, worin R einen Alkylrest mit 6 bis 12 C-Atomen, der gesättigt oder ungesättigt, geradkettig oder verzweigt sein kann, PO eine Propylenoxid-Einheit und x eine Zahl im Bereich von 1 bis 7 bedeutet, eignen sich in ausgezeichneter Weise als entschäumende Netzmittel in wässrigen Beschichtungssystemen, insbesondere Lacken und Farben.

## Beschreibung

### Gebiet der Erfindung

Die Erfindung betrifft die Verwendung von Verbindungen spezieller Struktur als entschäumende Netzmittel für wässrige Beschichtungssysteme, insbesondere Farben und Lacke.

### Stand der Technik

Substratnetzmittel sind grenzflächenaktive Verbindungen, die die Oberflächenspannung insbesondere von wässrigen Lack- und Farbformulierungen herabsetzen, um so zum Beispiel die Untergrundbenetzung und auch den Verlauf zu fördern. Substratnetzmittel sind insbesondere dann von Bedeutung, um Störungen im Lackfilm zu vermeiden wenn das Substrat eine niedrige Oberflächenspannung aufweist (wie zum Beispiel Kunststofffolien) oder durch ölige Substanzen verunreinigt ist.

Substratnetzmittel sind in flüssiger und fester Form erhältlich und oft stellen die kommerziell erhältlichen Produkte Mischungen verschiedener grenzflächenaktiver Verbindungen dar. Hierbei gilt als allgemeines Fachwissen, dass derartige grenzflächenaktiven Verbindungen amphiphilen Charakter aufweisen, d.h. sie sind generell aus einem hydrophilen und einem hydrophoben Molekülteil aufgebaut. Dabei sind typische hydrophile Bausteine dieser Amphiphile anionische Gruppen oder Ethylenoxid-Einheiten. Oft werden heute noch sogenannte Alkylphenolethoxylate eingesetzt, auf die man aber aus Umweltschutzgründen in zunehmendem Maße verzichten möchte. Als Alternativen zu den Alkylphenolethoxylaten haben sich u.a. die Alkoholethoxylate, also Additionsprodukte von Ethylenoxid an (hydrophobe) Alkohole etabliert. Ein Nachteil der Alkylphenolethoxylate und auch vieler Alkoholethoxylate ist die oftmals schaumstabilisierende Wirkung dieser Substratnetzmittel. Der sich bei der Herstellung und Verarbeitung von Farben und Lacken bildende Schaum stört die Prozessabläufe und Handhabung und wird deshalb aufwändig mit schaumzerstörenden Additiven unterdrückt. Um dem Problem der Schaumstabilisierung entgegenzuwirken, sind in der Vergangenheit verschiedene Produkte entwickelt worden. Als schaumarme Netzmittel werden zum Beispiel oftmals Alkoholalkoxylate eingesetzt. Typische kommerziell erhältliche Alkoholalkoxylate bestehen in der Regel aus linearen oder verzweigten Alkoholen, die mit Ethylenoxid (EO) und gegebenenfalls zusätzlich mit Propylenoxid (PO) oder auch höheren Epoxiden (z.B. Butylenoxid, BuO) umgesetzt wurden. Wie dem Fachmann bekannt, dienen EO-Einheiten dazu, den hydrophilen Molekülteil aufzubauen, während die (aus dem Alkoholbaustein stammenden) Alkylreste und auch die PO-Einheiten den hydrophoben Molekülteil bilden.
Es ist auch bekannt (vergleiche WO-A-2009/061452 und EP-A-681,865**),** Alkoholpropoxylate in Kombination mit weiteren Tensiden zu formulieren und als schaumarme Reiniger einzusetzen,

### Beschreibung der Erfindung

Es besteht ein ständiger Bedarf nach Verbindungen für die spezielle Verwendung in wässrigen Beschichtungssystemen, insbesondere Farben und Lacken, insbesondere Klarlacken, die einerseits gute Netzmitteleigenschaften aufweisen und andererseits schaumarm sind, so dass sie die Prozessabläufe bei der Verarbeitung der Beschichtungssysteme nicht stören, ohne dass zusätzliche schaumzerstörende Additive zugesetzt werden müssen.

Aufgabe der vorliegenden Erfindung war es, entschäumende Netzmittel für wässrige Beschichtungssysteme, insbesondere Farben und Lacke, insbesondere Klarlacke, bereitzustellen, die diese Anforderungen erfüllen, also die einerseits gute Netzmitteleigenschaften (Absenken der Oberflächenspannung in wässrigen Systemen) aufweisen und andererseits entschäumend sind, so dass sie die Prozessabläufe bei der Verarbeitung von wässrigen Beschichtungssystemen, insbesondere Farben und Lacken nicht durch Schaum stören. Dadurch müssen idealerweise keine zusätzlichen schaumzerstörenden Additive zugesetzt werden oder deren Menge kann reduziert werden.

Unter wässrigen Beschichtungssystemen werden im Rahmen der vorliegenden Erfindung wässrige Farb- bzw. Lackrezepturen sowie wässrige Klebstoffrezepturen verstanden. Diese enthalten üblicherweise Wasser, Bindemittel und Emulgatoren/Dispergatoren sowie weitere, übliche Inhaltsstoffe, etwa Pigmente oder Füllstoffe und weitere Additive (z.B. auch Lösemittel, Koaleszenzmittel, Weichmacher, Entschäumer, Dispergiermittel, Netzmittel etc.). Bindemittel sind typischerweise wässrige Polymerdispersionen. Solche Polymerdispersionen können durch verschiedene Polymerisationsverfahren (z. B. Emulsionspolymerisation, Suspensionspolymerisation) direkt aus den Monomeren oder auch durch Dispergieren eines Polymeren hergestellt werden. Zur Herstellung und Stabilisierung der Polymerdispersionen werden zumeist Emulgatoren und Dispergatoren eingesetzt. Das sind typischerweise anionische oder nichtionische Tenside, wobei die nichtionischen Tenside zumeist EO-Bausteine enthalten. Verbindungen der unten definierten Struktur (I) sind als Emulgatoren/Dispergatoren ausgeschlossen.
Beispiele für wässrige Beschichtungssysteme im Sinne dieser Erfindung sind pigmentierte und unpigmentierte wässrige Farben- und Lackformulierungen und Klebstoffe, insbesondere Anstrichfarben, Bautenfarben, Grundierungen, Druckfarben, Überdrucklacke, Kartonagendruckfarben, Tapetenfarben, Papierstreichfarben, Industrielacke, Industriebeschichtungen, Lederlacke, Holzlasuren, Holzlacke, Beizen, Automobillacke, Kunststoffbeschichtungen, Fußbodenbeschichtungen, Schiffsfarben, Korrossionsschutzlacke und Klebstoffe.

Es sei ausdrücklich festgestellt, dass die erfindungsgemäße Aufgabe sich auf die gleichzeitige Erzielung der genannten technischen Effekte in wässrigen Beschichtungssystemen, insbesondere in wässrigen Farben und Lacken, insbesondere Klarlacken, richtet und nicht etwa auf andere wässrige Systeme oder auf Wasser allein.

Es wurde nun gefunden, dass spezielle Alkoholpropoxylate der unten definierten Struktur (I) die erfindungsgemäße Aufgabe in ganz ausgezeichneter Weise zu lösen vermögen.

Gegenstand der vorliegenden Erfindung ist die Verwendung von Verbindungen der Struktur (I)

R-O-(PO)ₓH (I)

worin R einen Alkylrest mit 6 bis 12 C-Atomen, der gesättigt oder ungesättigt, geradkettig oder verzweigt sein kann, PO eine Propylenoxid-Einheit und x eine Zahl im Bereich von 1 bis 7 bedeutet, als entschäumende Netzmittel für wässrige Beschichtungssysteme.

Wässrige Farben und Lacke sind als wässrige Beschichtungssysteme bevorzugt. Klarlacke sind als wässrige Beschichtungssysteme besonders bevorzugt.

Die Verbindungen (I) können nach allen dem Fachmann bekannten Methoden hergestellt werden. Üblicherweise geschieht dies dadurch, dass man die entsprechenden Alkohole in Gegenwart eines Katalysators mit Propylenoxid umsetzt. Im Hinblick auf den Index x sei in diesem Zusammenhang festgestellt, dass es sich hier um einen (statistischen) Mittelwert handelt; so bedeutet für R-O-(PO)ₓH die Aussage x = 1, dass man 1 mol ROH mit 1 mol Propylenoxid umgesetzt hat, x = 2 bedeutet, dass man 1 mol ROH mit 2 mol Propylenoxid umgesetzt hat, x = 4 bedeutet, dass man 1 mol ROH mit 4 mol Propylenoxid umgesetzt hat, x = 6 bedeutet, dass man 1 mol ROH mit 6 mol Propylenoxid umgesetzt hat, usw. Mithin repräsentiert der Index x das molare Umsetzungsverhältnis von Alkohol und Propylenoxid, wobei die Alkoholpropoxylate (I) sich je nach eingesetztem Katalysator in der Homologenverteilung unterscheiden können.

Der Begriff "entschäumende Netzmittel" ist im Rahmen der vorliegenden Erfindung wie folgt definiert: Die entschäumenden Netzmittel reduzieren gegenüber einer Probe ohne entschäumendem Netzmittel die Oberflächenspannung in der nachfolgend beschriebenen Bestimmung der Oberflächenspannung (Test 1) um mindestens 5% - vorzugsweise um mindestens 10% - und sie erhöhen die Dichte gegenüber einer Probe ohne entschäumendem Netzmittel im nachfolgend beschriebenen Schaumtest (Test 2) um mindestens 5%, vorzugsweise um mindestens 10%.

Die Bestimmung der Oberflächenspannung (Test 1) wird wie folgt durchgeführt:
(1) Die kommerziell erhältliche Bindemitteldispersion NeoPac E-106 der Fa. DSM NeoResins wird im Gewichts-Verhältnis 4:1 mit demineralisiertem Wasser verdünnt. Die dabei erhaltene Mischung wird als Testsystem (1) bezeichnet.
(2) Als Referenzwert wird nun die Oberflächenspannung des Testsystems (1) bestimmt. Die Oberflächenspannung wird mit einem Blasendrucktensiometer der Firma SITA science line t60 ermittelt (Messbereich 10-100 mN/m; Messabweichung Max. 1% f.s.; Reproduzierbarkeit 0,5 mN/m; Blasenfrequenz 0,01-10 Hz; Temperatur 22°C). Die Oberflächenspannung wird bei einer Frequenz von 1 Hz angegeben.
(3) Dem Testsystem (1) werden 0,5 Gew. % - bezogen auf die Menge des Testsystems (1) - des zu prüfenden entschäumenden Netzmittels zudosiert und durch Rühren sorgfältig eingearbeitet. Die Oberflächenspannung der so erhaltenen Mischung wird wie unter Nr. (2) angegeben bestimmt.

Der Schaumtest (Test 2) wird wie folgt durchgeführt:
(1) Die kommerziell erhältliche Bindemitteldispersion NeoPac E-106 der Fa. DSM NeoResins wird im Gewichts-Verhältnis 4:1 mit demineralisiertem Wasser verdünnt. Die dabei erhaltene Mischung wird als Testsystem (2) bezeichnet.
(2) Als Referenzwert wird zunächst der Schaumtest an dem Testsystem (2) durchgeführt. Dazu wird das Testsystem (2) für 3 min bei 5000 rpm mit einem Labordissolver (Durchmesser Dissolverscheibe: 4cm) gerührt. Anschließend wird die Dichte des aufgerührten Testsystems (2) mit dem Lack-Pyknometer bestimmt.
(3) Dem Testsystem (2) werden 0,5 Gew. % - bezogen auf die Menge des Testsystems (2) - des zu prüfenden entschäumenden Netzmittels zudosiert und durch Rühren sorgfältig eingearbeitet.

Die Mischung wird dann ebenfalls für 3 min bei 5000 rpm mit einem Labordissolver (Durchmesser Dissolverscheibe: 4cm) gerührt. Die Dichte der so erhaltenen Mischung wird wie unter Nr. (2) angegeben bestimmt.

In einer bevorzugten Ausführungsform ist R ein gesättigter Alkylrest mit 7 bis 10 C-Atomen und x eine Zahl im Bereich von 4 bis 6. Verbindungen (I), in denen R ein gesättigter Alkylrest mit 8 C-Atomen ist und x die Zahl 6 bedeutet, sind besonders bevorzugt. Insbesondere sind Anlagerungsprodukte von 6 mol PO an 1 mol n-Oktanol bevorzugt, vor allem für die Verwendung in Klarlacken.

Es sei im vorliegenden Zusammenhang ausdrücklich herausgestellt, dass es für den Fachmann völlig überraschend ist, dass die Verbindungen (I) die erfindungsgemäße Aufgabe lösen. Die Aufgabe besteht ja, wie oben dargestellt, darin, dass zwei an sich gegenläufige Effekte zu erzielen waren, nämlich einerseits eine gute Netzwirkung bei gleichzeitiger Entschäumung und beides in ganz speziellen wässrigen Systemen, nämlich wässrigen Beschichtungssystemen, insbesondere Farben und Lacken. Dass es gerade spezielle Alkoholpropoxylate sind, die beide technischen Effekte erzielen, muss aus fachmännischer Sicht als Überwindung eines bestehenden technischen Vorurteils gewertet werden, da - wie oben einleitend ausgeführt - nach allgemeinem Verständnis - Netzmittel typischerweise strukturell Amphiphile sind, also hydrophobe und hydrophile Strukturelemente enthalten. Die erfindungsgemäß einzusetzenden Verbindungen (I) sind aber hydrophobe Verbindungen, da sowohl die Alkylreste R als auch die PO-Bausteine als hydrophob gelten; da sie hydrophob sind, sind sie in reinem Wasser unlöslich.

Es sei auch erwähnt, dass z.B. hydrophobe Verbindungen wie Mineralöle als Entschäumer bekannt sind, jedoch sind sie einerseits keine guten Netzmittel und führen andererseits zu Störungen in Lackfilmen (sie verursachen z.B. Trübungen in Klarlacken). Umso überraschender ist es für den Fachmann, dass die hydophoben Verbindungen (I) in wässrigen Beschichtungssystemen, insbesondere wässrigen Lacken und Farben gut netzen, entschäumend sind und gleichzeitig die anwendungtechnischen Prozesse in den wässrigen Beschichtungssystemen, insbesondere Lacken und Farben nicht negativ beeinträchtigen.

Die Verbindungen (I) sind in einem weiten Temperaturbereich bei Raumtemperatur (20 °C) flüssig und daher leicht handhabbar und dosierbar. Dass der Alkylrest R der Verbindungen (I) in bevorzugten Ausführungsformen auf linearen Alkoholen (Fettalkoholen) beruht, und somit auf nachwachsenden Rohstoffen, ist ein weiterer Vorteil.

### Beispiele

### Eingesetzte Substanzen:

Alle Netzmittel wurden hergestellt durch Anlagerung von Ethylenoxid und/oder Propylenoxid an Alkohole. Es bedeuten:
**C10 - 3EO:** Anlagerungsprodukt von 3 mol Ethylenoxid an 1 mol n-Dekanol.
**i-C8 - 3EO:** Anlagerungsprodukt von 3 mol Ethylenoxid an 1 mol 2-Ethylhexanol.
**i-C8-3PO-b-3EO:** Anlagerungsprodukt von 3 mol Propylenoxid und 3 mol Ethylenoxid an 1 mol 2-Ethylhexanol. PO und EO wurden dabei blockweise angelagert, wobei der Alkohol zunächst mit PO umgesetzt wurde und das resultierende Propoxylat anschließend mit EO.
**i-C9-3PO-b-3EO:** Anlagerungsprodukt von 3 mol Propylenoxid und 3 mol Ethylenoxid an 1 mol Isononanol. PO und EO wurden dabei blockweise angelagert, wobei der Alkohol zunächst mit PO umgesetzt wurde und das resultierende Propoxylat anschließend mit EO.
**C8-5PO-b-1EO:** Anlagerungsprodukt von 5 mol Propylenoxid und 3 mol Ethylenoxid an 1 mol n-Oktanol. PO und EO wurden dabei blockweise angelagert, wobei der Alkohol zunächst mit PO umgesetzt wurde und das resultierende Propoxylat anschließend mit EO.
**C8 - 6PO:** Anlagerungsprodukt von 6 mol Propylenoxid an 1 mol n-Oktanol.
**C8 - 5PO:** Anlagerungsprodukt von 5 mol Propylenoxid an 1 mol n-Oktanol.
**C8 - 4PO:** Anlagerungsprodukt von 4 mol Propylenoxid an 1 mol n-Oktanol.
**C8 - 6PO:** Anlagerungsprodukt von 6 mol Propylenoxid an 1 mol n-Oktanol.

Diese Verbindungen sind in den nachfolgenden Tabellen 1 und 2 noch einmal aufgeführt und dabei in erfindungsgemäß und nicht erfindungsgemäß (zum Vergleich) klassifiziert.

**Tabelle 1: Nicht erfindungsgemäße, alkoxylierte Netzmittelstrukturen**

| **Verbindung** | **Struktur** |
|---|---|
| V1 | C10-3EO |
| V2 | 1-C8-3EO |
| V3 | i-C8-3PO-b-3EO |
| V4 | i-C9-3PO-b-3EO |
| V5 | i-C9-3EO-b-3PO |
| V6 | C8-5PO-b-1EO |

**Tabelle 2: Erfindungsgemäße, entschäumende Netzmittelstrukturen**

| **Verbindung** | **Struktur** |
|---|---|
| V7 | C8-6PO |
| V8 | C8-5PO |
| V9 | C8-4PO |

### Untersuchungsmethoden:

Die Bestimmung der Oberflächenspannung erfolgte nach dem oben beschriebenen Test 1. Der Schaumtest erfolgte nach dem oben beschriebenen Test 2.

Die Testergebnisse können den nachfolgenden Tabellen 3 und 4 entnommen werden.

**Tabelle 3: Oberflächenspannungen gemäß Test (1)**

| **Nr.** | **Struktur** | **Oberflächenspannung bei 1 Hz (mN/m)** | **Reduktion der Oberflächenspannung gegenüber Referenz (%)** |
|---|---|---|---|
| Referenz | | 56,7 | 0 |
| V1 | C10-3EO | 41,8 | -26 |
| V2 | i-C8-3EO | 44,2 | -22 |
| V3 | i-C8-3PO-b-3EO | 42,4 | -25 |
| V4 | i-C9-3PO-b-3EO | 42,4 | -25 |
| V5 | i-C9-3EO-b-3PO | 42,3 | -25 |
| V6 | C8-5PO-b-1EO | 42,1 | -26 |
| V7 | C8-6PO | 42,2 | -26 |
| V8 | C8-5PO | 43,7 | -23 |
| V9 | C8-4PO | 44,4 | -22 |

**Tabelle 4: Dichten gemäß Test (2)**

| **Nr.** | **Struktur** | **Dichte (g/mL)** | **Erhöhung der Dichte gegenüber Referenz (%)** |
|---|---|---|---|
| Referenz | / | 0,497 | 0 |
| V1 | C10-3EO | 0,39 | -22 |
| V2 | 1-C8-3EO | 0,482 | -3 |
| V3 | i-C8-3PO-b-3EO | 0,435 | -12 |
| V4 | i-C9-3PO-b-3EO | 0,474 | -5 |
| V5 | i-C9-3EO-b-3PO | 0,501 | 1 |
| V6 | C8-5PO-b-1EO | 0,438 | -12 |
| V7 | C8-6PO | 0,861 | 73 |
| V8 | C8-5PO | 0,802 | 61 |
| V9 | C8-4PO | 0,812 | 63 |

Aus den Tabellen 3 und 4 ist ersichtlich, dass die erfindungsgemäßen, entschäumenden Netzmittel die Oberflächenspannung der Bindemitteldispersion (gemäß Test 1) um mindestens 22% reduzieren und auch die Dichten gemäß dem Schaumtest (Test 2) um mindestens 61% erhöhen. Die nicht erfindungsgemäßen Netzmittelstrukturen zeigen dagegen teilweise eine deutliche Reduktion der Dichten nach dem Schaumtest (unerwünschter Schaumaufbau) oder erhöhen die Dichten nur um maximal 1% (und sind damit allenfalls als schaumarm bzw. schaumneutral einzustufen, jedoch nicht als entschäumend).

## Patentansprüche

1. Verwendung von Verbindungen der Struktur (I)
R-O-(PO)ₓH (I)
worin R einen Alkylrest mit 6 bis 12 C-Atomen, der gesättigt oder ungesättigt, geradkettig oder verzweigt sein kann, PO eine Propylenoxid-Einheit und x eine Zahl im Bereich von 1 bis 7 bedeutet, als entschäumende Netzmittel für wässrige Beschichtungssysteme.

2. Verwendung nach Anspruch 1, wobei es sich bei den wässrigen Beschichtungssystemen um Farben und Lacke handelt.

3. Verwendung nach Anspruch 2 in Klarlacken.

4. Verwendung nach einem der Ansprüche 1 bis 3, wobei R ein gesättigter Alkylrest mit 7 bis 10 C-Atomen und x eine Zahl im Bereich von 4 bis 6 ist.

5. Verwendung nach einem Anspruch 4, wobei R ein gesättigter Alkylrest mit 8 C-Atomen ist und x die Zahl 6 bedeutet.

6. Verwendung nach Anspruch 4, wobei (I) ein Anlagerungsprodukt von 6 mol PO an 1 mol n-Oktanol ist.
